# EUROPEAN PATENT APPLICATION

(11) **EP 1 128 693 A1**
(43) Date of publication of application: **29.08.2001**
(21) Application number: 00104084.9
(22) Date of filing: 28.02.2000
(51) Int. Cl.: H04Q 7/34

(54) **Testing acoustic properties of a mobile terminal**

(71) Applicant: TELEFONAKTIEBOLAGET LM ERICSSON (publ), 126 25 Stockholm (SE)
(72) Inventor: Dörbecker, Matthias, 90491 Nürnberg (DE); Hellwig, Karl, 97539 Wonfurt (DE); Beckmann, Bernd, 59293 Borghamn (SE)
(74) Representative: Mohsler, Gabriele

(57) **Abstract**

A Method for testing acoustic properties of a terminal for mobile communication is disclosed. A terminal for mobile communication comprises usually a microphone to pick up a spoken words, a speech encoder to encode the spoken words into rate reduced data, a radio interface to transmit the rate reduced data and to receive rate reduced data, a speech decoder to decode the received rate reduced data into a speech signal and a loudspeaker to reproduce the speech signal.

In order to use any desired test signal for testing elements of the acoustic part of the terminal the invention proposes that in the test mode data words representing test data are sent via the radio interface to the terminal which are bypassed to the speech decoder of the terminal and/or that data words representing test result data are bypassed to the speech encoder of the terminal and are transmitted by the terminal via the radio interface.

## Description

### FIELD OF THE INVENTION

The present invention relates to a method for testing acoustic properties of a terminal for mobile communication, by setting the terminal into a test mode, whereby the terminal comprises a microphone to pick up a spoken words, a speech encoder to encode the spoken words into rate reduced data, a radio interface to transmit the reduced data and to receive rate reduced data, a speech decoder to decode the received rate reduced data into a speech signal and a loudspeaker to reproduce the speech signal.

The invention also relates to a test device as such, a terminal for mobile communication as such and the software used for testing such terminals.

### DESCRIPTION OF THE PRIOR ART

Terminals for mobile communication are subjected to audio tests in so called type approval tests to demonstrate the compliance with appropriate recommendations prior to the introduction of new phones into the market as well as in production tests to ensure a continuously high level of quality and to monitor the production process. The purpose of the audio test is to measure the properties of the acoustic front end of the terminal, i.e. of the microphone and the loudspeaker, in terms of frequency response, sensitivity, sound pressure level, distortion, etc. For testing the microphone the microphone's electrical output signal must be measured while the microphone is excited by a predefined external acoustical test signal. Correspondingly the loudspeaker is tested by measuring the sound generated by the loudspeaker for a predefined electrical excitation signal.

In order to reduce the data rate that is required to transmit digitally coded audio signals via the radio interface up-to-date terminals for mobile communications comprise a so-called speech codec, consisting of a speech encoder to transform a speech signal into a digital signal and a speech decoder for transforming a digital signal into a speech signal. Speech codecs are implemented as hardware circuits or as a software program carried out in a microprocessor or a dedicated digital signal processor (DSP). Due to the fact that these codecs are designed for the transmission of speech signals it is not possible to transmit any desired measurement signal via such a codec.

To overcome this problem it is well known in the prior art, for example in EP 0 535 838 A2, to use a digital audio interface (DAI) between a mobile terminal and a system simulator. By means of this digital audio interface the output signal of the microphone, after it has been converted from an analogue to a digital signal by means of an analogue-to-digital converter (ADC) is output to the system simulator. Similarly, pulse code modulation (PCM) data generated by the system simulator is fed instead of the output signal of the speech decoder to a digital-to-analogue converter (DAC) inside the terminal. The DAC converts the PCM data to an analogue signal, which is reproduced by the loudspeaker of the terminal.

It is a shortcoming of the state of the art that the set up of an electrical connection via the known digital audio interface causes mechanical problems and requires high mechanical accuracy. Due to the fact that the digital audio interface usually is located on the printed circuit board the digital audio interface is not easily accessible in highly integrated terminals. Especially for production tests, where every terminal has to be tested individually, connecting the terminal to a DAI is too time consuming and in general needs manual operation. Furthermore the implementation of the digital audio interface into each terminal for test purposes only results in additional costs which should be minimised or avoided.

### SUMMARY OF THE INVENTION

It is therefore a principal object of the invention to test terminals with a system simulator in a time and cost efficient way.

This object of the invention is solved such that in the test mode data words representing test data are sent via the radio interface to the terminal which are bypassed to the speech decoder of the terminal and/or that data words representing test result data are bypassed to the speech encoder of the terminal and are transmitted by the terminal via the radio interface.

Using the radio interface has the advantage that no additional hardware interfaces, like plugs, have to be provided by the terminal. Thus a rough placement of the terminal in a testing device is fully sufficient and saves placement time. Furthermore it is now also possible to test the terminal with a closed housing.

Bypassing the speech codec eliminates the constraints of the speech codec and can be achieved in a very easy way by means of appropriate adopted software. Thus besides the initial costs for adding supplemental test code to the software no variable costs, like hardware costs for plugs etc. will occur.

In the direction from the test device to the terminal the data words transmitted via the radio interface could be used as well as an excitation signal for the terminal's loudspeaker (claim 3) or in an indirect way also as commands for a test signal generator incorporated in the terminal (claim 6). Advantageously the test generator is also build up by software and thus does not afford additional hardware.

In the reverse direction, from the terminal to the test device, the output signal of the terminal's microphone could be transmitted as data words (claim 4) or the output signal is (pre-)processed and only the results are transmitted to the test device (claim 7). While in regular operation mode the digital signal processor has to execute special functions like speech codec functions, during audio testing mode the processing power of the digital signal processor is used instead for signal generation and signal analysis.

A preferred embodiment is to set the terminal into a high data rate transmission mode so that the data words used as excitation signal for the terminal's loudspeaker or the response of the terminal's microphone to an external excitation can be transmitted in real time. If the design of the terminal does not allow a high data rate transmission mode, then a preferred embodiment according to claim 5 is to use the data rate reduced speech radio transmission channel for transmitting the data at a data rate that fits to the data rate of the radio channel. That means that the data words are transmitted on the radio interface at a data rate that is lower than the data rate of the excitation signal to the loudspeaker and response signal from the microphone.

The data words received at the terminal are buffered in a memory of the terminal. After having been stored into the memory or even during storing the buffered data words are read out in real time to form the exact excitation signal. In the reverse direction the output signal of the terminal's microphone could be written in real time to that memory and be read out with the data rate that fits to the radio channel data rate. Although the test can not be run in real time this is a very simple solution and will cause only moderate costs in software design changes.

But also in high data rate transmission mode buffering could be advantageous in order to use a standard high data rate channel.

The solution according to claims 5 and 6 to transmit only command words and results has the advantage that the amount of the data that has to be transmitted via the radio interface can be reduced. Thus the command words or result data words will also fit to the data rate of the radio interface. Thus also with a low data rate transmission channel testing can be performed in real time.

Instead of directly exciting the terminal's loudspeaker and directly recording the terminal's microphone signal also intermediate signals, such as to and from an "acoustic echo treatment unit" or an "acoustic background noise suppression unit" could be accessed, if appropriate. Also this would require only minor SW changes to the terminal.

### BRIEF DESCRIPTION OF THE INVENTION

In the following the invention will be further described according to the figures and by means of examples
- Fig. 1:: Test device and terminal using high data rate channel for transmitting plain test signals and results
- Fig. 2: Test device and terminal using high rate channel for testing the speech encoder and speech decoder
- Fig. 3:: Test device and terminal with transmitting coded commands and condensed results in real time
- Fig. 4:: Test device and terminal with buffering test signals and results for non real time transmission

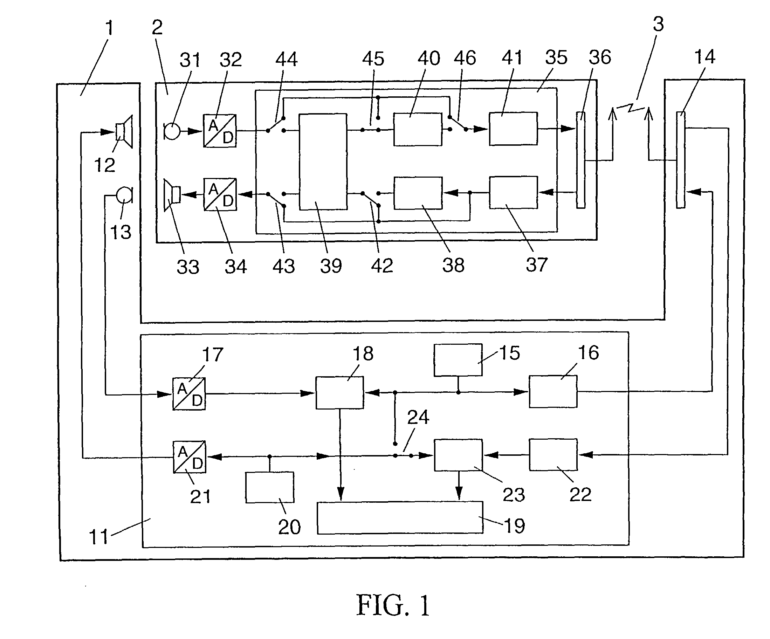

Fig. 1 shows as a first embodiment of the invention a test arrangement for a mobile terminal that is designed to work in a cellular net with a low data rate speech channel (e.g. 8 kbit/s) and a high data rate channel (e.g. for picture transmission with e.g. a data rate of 128 kbit/s). In this test arrangement a test device 1 and a mobile terminal 2 are connected to each other via a radio link 3. The test device 1, e.g. a so-called system simulator comprises a control unit 11, a loudspeaker 12, a microphone 13 and a radio interface 14, which incorporates a radio transmitter as well as a radio receiver (not shown separately). The mobile terminal 2 comprises at least in its sending path a microphone 31 and an analogue-to-digital converter (ADC) 32 and in its receiving path a loudspeaker 33 and a digital-to-analogue converter (DAC) 34. A processing device 35, which is used for the receiving path as well as for the sending path, is connected to a radio interface 36, which also incorporates a radio transmitter and a radio transceiver (Not shown separately). Also not shown are further components of a mobile terminal like keypad, display, power supply etc. as they are not part of the invention.

In well-known manner the loudspeaker 12 and the microphone 13 of the test device 1 are arranged in a way that they correspond to the position of the microphone 31 and the loudspeaker 33 of the mobile terminal 2. If the tests for the sending and receiving direction are carried out simultaneously the acoustic sound fields have to be separated in an appropriate way.

Now firstly the structure of the test device 1 is explained in detail. To test the acoustic properties of the terminal's loudspeaker 33 the control unit 11 comprises a first test signal generator 15 to generate appropriate test signals. The data words of the test signal are then provided with error protection by a channel encoder 16 of the test device 1 before they are fed to the radio interface 14 of the test device 1. In this first embodiment the radio interface 14 is operated in a high speed data mode which enables the test device 1 to transmit and receive data words at a data rate that is higher than the data rate that is used usually for transmitting encoded speech signals.

The microphone 13 of the test device 1 picks up the corresponding acoustical response of the terminal's loudspeaker 33. The output signal of the microphone 13 of the test device is fed to a ADC 17 of the control unit and is compared in first evaluation means 18 with the transmitted test signal of the first test signal generator 15. By this it is guaranteed that the excitation signal of the loudspeaker 33 inside the mobile terminal 2 is identical to the signal that has been generated by the signal generator 15. Thus the properties of the built in loudspeaker 33, e.g. the effective sound pressure, the frequency response, and the non-linear harmonic distortions at different excitation frequencies can be evaluated reliably in order to determine, if the terminal will pass the quality check.

The result of the evaluation is displayed to the operator of the test device 1 by display means 19. The displayed information could be shown as a test passed / test failed signal. Alternative or supplementary detailed information like frequency response may be displayed or summarised in a printed report. A test passed / test failed signal may also be used to trigger further action in an assembly line, like automatically picking out all terminals which have failed and lead them towards a repair site.

To test the terminal's microphone 31 a second test signal generator 20 is used. Although a single test generator would be sufficient for this kind of test, two separate test generators will allow simultaneously tests with test signals that differ from each other. The digital output signal of the second test signal generator 20 is first converted by a DAC 21 of the test device 1 into an analogue signal. This analogue signal is used to excite the loudspeaker 12 of the test device 1. The response of the terminal's microphone 31 is received by the radio interface 14 of the test device 1. The received signal passes first a channel decoder 22 in which the output signal of the microphone 31 of the terminal is recovered. The recovered output signal of the terminal's microphone 31 is then compared by second evaluation means 23 with the test signal of the second test signal generator 20. Hereby again it is guaranteed that the data words that have been received via the radio interface 14 from the terminal 2 are bit identical with the output signal of the ADC 32 and therefore correspond exactly to the terminal's microphone 31 output signal.

To test any other element of the terminal 2 that is situated in the terminals acoustic processing part the test device 1 is also foreseen to send the output signal of the first test signal generator 15 to the terminal 2. The expression acoustic processing part of the terminal is used in this document for all elements and functions which are arranged between the speech codec 38, 40 and the terminal's microphone 31 and loudspeaker 33, including the speech decoder 38 and speech encoder 40. The data words that are sent back by the terminal as a response to the test signal are compared in the test device 1 by the second evaluation means 23 with the output signal of the first signal generator 15. For this kind of test the output signal of the first test signal generator is fed to the second evaluation means 23 instead of the output signal of the second test generator 20. This is symbolised by means of a switch 25.

In the preferred embodiment the test signal generator 15 generates the test signals as PCM data words with a data width of 8...16 bits and a data rate of 8000 samples per second. That gives a rate of 8...16 kbyte/s or 64...128 kbit/s, respectively. By means of this sample rate the frequency response of the terminals loudspeaker can be measured from 0 up to 4 kHz. As the DAC 32 in the terminal 2 uses the same sampling rate the response of the terminal's microphone 31 can be measured in between the same range in the reverse direction.

Now the design of a terminal 2 according to the invention is described. Radio signals received in test mode via the radio interface are fed to the processing device 35. In the following passages the word processing device is used as a synonym for all kind of hardware that can be used in mobile terminals for data processing and controlling purposes. Therefore general purpose processing devices like so called micro processors, dedicated programmable hardware like so called digital signal processors as well as hardware programmable logic circuits like Application Specific Integrated Circuits (ASICs) should be covered by the term processing device. Due to certain constraints like computing power, integration size, availability etc. up to now it was common to distribute functions like processing and controlling to more than one device. Therefore a person skilled in the state of the art should be aware that processing device also means a set or any combination of microprocessors, digital signal processors, ASICs etc.

The processing device 35 in this first embodiment provides a channel decoder 37, a speech decoder 38, a echo cancelling unit 39, a speech encoder 40 and a channel encoder 41. By means of the channel decoder 37 the content of a channel coded signal received via the radio interface 36 is recovered.

By means of five switches 42-46, which are arranged in the terminal 2, the terminal 2 can be set from a normal mode of operation, that means when the terminal is used as a mobile phone, into different test modes. Fig. 1 shows the switches 42-46 in the position for testing the acoustic properties of the terminals microphone 31 and loudspeaker 33. As the processing device 35 may also consist of a software program the switches 42, 43, 44, 45,46 shall also symbolise branching in software code or executing different subroutines.

In normal mode of operation the output signal of the channel decoder 37 is fed to the speech decoder 38, the output signal of the speech decoder 38 is fed by means of the first switch 42 to a first input of the echo-cancelling unit 39. By means of the second switch 43 the first output of the echo-cancelling unit 39 is fed to the DAC 34. The analogue output signal of the DAC 32 is output as the decoded speech signal by the terminal's loudspeaker 33. In the reverse direction the output signal of the ADC 32 is fed by means of the third switch 44 to a second input of the echo-cancelling unit 39. By means of the fourth switch 45 the second output signal of the echo-cancelling unit 39 is fed to the input of the speech encoder 40. By means of the fifth switch 46 the output of the speech encoder 40 is fed to the input of the terminal's channel encoder 41. According to the invention in test mode the test signal received via the radio interface 36 is directly fed to the DAC 32 of the mobile terminal 2. For this the second switch 43 connects the input of the DAC 34 instead with the first output of the echo-cancelling unit 39 with the output of the channel decoder 37. The analogue output signal of the DAC 34 is fed to the loudspeaker 33 of the mobile terminal 2 as an excitation signal. By this the speech decoder 38 is bypassed and the test signal fed to the DAC 32 must not show the constraints of a speech coded signal.

In the reverse direction the mobile terminal 2 receives the acoustic test signals of the test device 1 by its microphone 31. The ADC 32 first converts the received analogue signal to digital data words. By means of the third switch 44 and the fifth switch 46 these data words are directly fed to the channel encoder 41 of the processing device 35 and thus bypass the terminal's speech encoder 40. The output signal of the channel encoder 41 is then transmitted via the radio interface 36 to the test device 1

To test the proper function of the echo cancelling unit 39 the switches 42, 43, 44, 45 and 46 of the processing device 35 are set in that way that the output of the channel decoder 37 is connected to the first input of the echo-cancelling unit 39, the corresponding first output of the echo cancelling unit is connected to the DAC 34, the output of the ADC 32 is connected to the second input of the echo cancelling unit 39, and the corresponding second output of the echo cancelling unit 39 is connected to channel encoder 41. By this the test signal is passed through the echo-cancelling unit 39 and produces an acoustical signal by means of the loudspeaker 33 of the terminal. A fraction of this acoustic signal is reflected to the microphone 31 of the terminal 2 and thus is input to the second input of the echo-cancelling unit 39. As the reflected signal will cause an echo in the other parties phone, the echo-cancelling unit 39 is designed to suppress as much as possible of the reflected signal. In echo-cancelling test mode the output signal of the echo-cancelling unit 39 is sent back to the test device 1. By means of a switch 24 in the test device 1 the output signal of the first test generator 15 is fed to the second evaluation means 25 instead of the output signal of the second test generator 20. By this the second evaluation means 25 can calculate the suppression ratio of the signal send to the terminal and the signal reflected by the terminal 2.

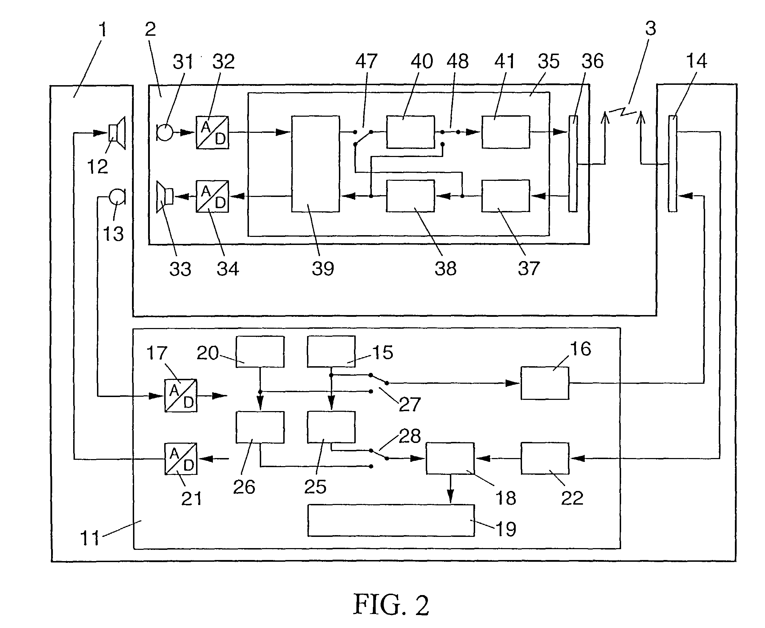

A further most advantageous test application, which is shown in figure 2 is to test the speech decoder 38 and the speech encoder 40 for their bit exactness. For this purpose the test device 1 provides a reference speech encoder 25 and a reference speech decoder 26, which apply to a given standard. The first signal generator 15 in this case generates defined test patterns, which correspond to PCM-coded speech signals. These PCM-coded speech signals are fed to the reference speech encoder 25 and by means of a switch 27 to the channel encoder 16. The output of the reference speech encoder 25 is connected by means of a further switch 28 to the first input of evaluation means 18. The output signal of the channel encoder 16 is transmitted to the terminal 2 via the high-speed data radio link 3.

In order to test the speech encoder 40 the output signal of the terminal's channel decoder 37 is fed to the input of the terminal's speech encoder 40 by means of a sixth switch 47. The output signal of the terminal's speech encoder 40 is fed to the input of the channel encoder 41 and thus sent back to test device 1. The output signal of the test device's channel decoder 22 is fed to the second input of the first evaluation means 18. As by this the reference speech encoder 25 as well as the terminal's speech encoder 40 have been provided with the same test patterns, they will both show identical output signals if the terminal's speech decoder fully applies to the given standard it was designed for.

In the same way the terminal's speech decoder 38 can be tested. For this purpose the second signal generator 20 generates defined data words that correspond to speech encoded signals. Another possibility to get appropriate test signals is to encode the PCM-coded speech signals of the first test generator 15 by means of the reference speech encoder 25. The speech coded test signals are sent to the terminal's speech decoder 38 and by means of switch 28 are fed to the first input of the first evaluation means 18. In the terminal 2 the received test signals are passed from the channel decoder 37 to the terminal's speech decoder 38 and by means of a seventh switch 48 are directly fed to the terminal's channel encoder 41. In the test device 1, the output signal of the reference decoder 26 is compared with the output signal of the terminal's speech decoder 38 to test the accuracy of the terminal's speech decoder 38.

The way the speech encoder 40 and the speech decoder 38 are tested is also an example for testing any means in between the ADC 32 and speech encoder 40 and the speech decoder 38 and the DAC 34 respectively in the beneficial way of the invention. Other means in that path are for example noise suppressing means etc. In the same manner as in the speech encoder / speech decoder test the test signal coming from the channel decoder 37 is applied to the input of the device that should be tested instead of its regular input signal. The output signal of that device is then directly fed to the input of the channel encoder 41. By this every device can be subject of a bit exactness test. The device to be tested can be provided with any test pattern and the response hereto can be sent back to the test device 1 without any encoding loss.

In the preferred embodiment of the invention the command to activate the described audio tests of the mobile terminal 2 is also sent from the test device 1 to the mobile terminal 2 via the radio interface. However any other method of activating the audio test mode is imaginable like entering a given sequence on the keypad. However, transmitting the activation signal via the radio interface has the advantage that it does not require any supplementary hardware and that it can be done without the need of human or mechanical operation. Once the mobile terminal has been set to the audio test mode, the control commands sent to the mobile terminal 2 and the test results sent from the mobile terminal 2 to the test device 1 may be defined with de facto unlimited freedom. Using the established radio channel the data format for the commands and results is restricted only by the data rate of the radio channel.

The advantage of the first embodiment is that it does not need much expenditure if a high rate data channel is available. How the processing device 35 preferably processes the data words depends on the particular properties of the terminal and especially on a given radio interface. As the processing devices 35 often will allow due to their inherent programmability a wide range of flexibility the limiting factor often will be set by the constraints of a given radio interface. In most cases the redesign of a radio interface will cause higher costs than writing software code for the processing device or is even impossible. But if transmitter or receiver design will allow it is also possible to establish a non-standard propriety radio channel with enlarged bandwidth for the purposes of audio testing only.

The embodiments described next will also be applicable if there is no such high data rate channel available. As the second embodiment is similar to the first embodiment same reference signs have been used to refer to the same elements and mainly only the necessary modifications will be explained in the following.

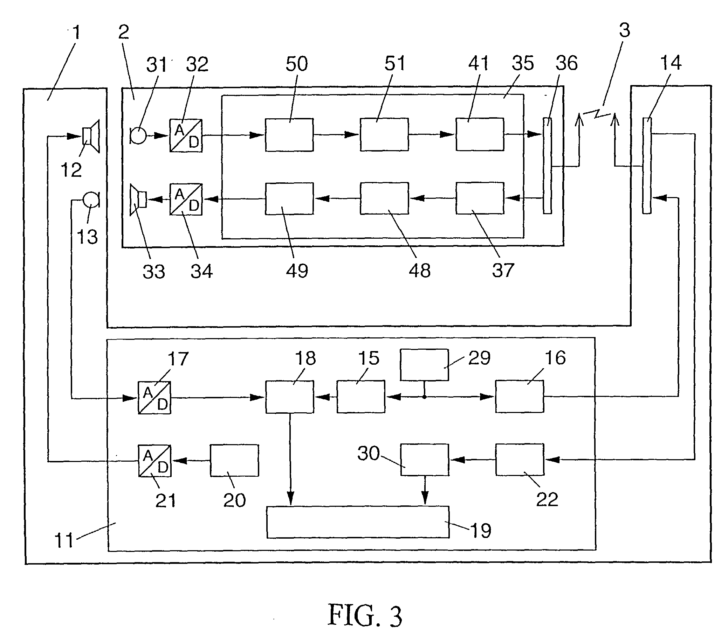

In the second embodiment, shown in figure 3, the test device 1 provides a command generator 29 which generates data words that are transmitted via the radio interface 3 to the terminal 2. These commands are also fed to the first signal generator 15 which can be controlled by these commands. The commands used to control the signal generator preferably define at least the type of the desired signal (sinus, noise, m-sequence) and the volume level. Additionally also a time dependent signal form like a frequency sweep or a level sweep may be triggered by a single command. The output of the first signal generator 15 is compared with the audio signal received by the test device's loudspeaker 12. Like in the first embodiment the output signal of the second test generator 20 is used to excite the test device's microphone 13.

In the second embodiment the terminal's processing device 35 is designed that the output of the channel decoder 37 is connected to the input of a command decoder 48. This command decoder 48 decodes the received commands and instructs a signal generator 49 to generate appropriate signals which coincide with the test signals that are simultaneously generated in the test device's first signal generator 15. The signal generator 49 generates the desired signal for instance by means of calculating the signal shape e.g. with trigonometric functions and applying an appropriate attenuation factor to set the output level before the signal is applied to the DAC 34.

For the audio test in the sending direction a signal analyser 50 is used for reducing the data that have to be transmitted via the radio interface. For this purpose the audio test software comprises program code to execute at least part the signal analysis that is used to evaluate the microphone's properties. Thus only signal parameters such as signal level, power spectral density, distortion ratio etc. have to be transmitted via the radio interface. By this way the properties of the terminal's microphone could be transmitted to the test device despite the low data rate channel in real time. The results of every evaluation are encoded in a result encoder 51 before this condensed information is passed to the terminal's channel encoder 41. As the response of the terminal's loudspeaker 33 has been already evaluated in the terminal only a result decoder 30 is needed in the test device 1.

By this in test mode the radio interface is only used to transmit test commands from the test device 1 to the mobile terminal 2 and to transmit test results from the mobile terminal 2 to the test device 1. Thus the relatively low data rate of the speech channel is sufficient to perform tests with PCM coded signals that show a bit rate that is higher than the net bit transmission rate provided by the given radio channel

In the preferred embodiment of the invention the commands sent to the terminal 2 and the condensed results sent back from the terminal 2 are transmitted in a standard speech channel via the radio interface. This has the advantage that only the processing device 35 has to be adopted but the radio has not to be redesigned. E.g. for a mobile terminal compliant to the GSM specification commands and results can be transmitted via layer-3 signalling or via in-band signalling. The latter may be realised similar to the SID-coding described in GSM recommendation 06.12. This means that the signalling is indicated on the so-called net bit layer, i.e. the test device 1 replaces the bits that are regularly generated by the speech encoder by a special bit pattern used as a keyword during one or several adjacent speech frames. The mobile terminal can detect this signalling by analysing the bit stream that is generated by the mobile terminal's channel decoder. Alternatively, the in-band signalling may also be realised similar to the RATSCCH-signalling, as is specified in GSM recommendation 05.09.

Another possibility is to transmit all control commands and results embedded into "native" type of frames. These native frames allow to use a higher data rate than in-band signalling but still channel encoder/decoder and all components between the channel encoder / channel decoder and the radio interface can remain unchanged. However, since original channel encoder and decoder are optimised for real life conditions (e.g. in GSM an unequal error protection for the different bits within each frame according to their importance is used) an alternative channel encoder and channel decoder e.g. with equal and/or enlarged bit fault protection may be used in order to guarantee a absolute error free transmission of control commands and results. On the other hand as the radio link between the terminal to be tested and the test equipment is very short the radio channel will see best conditions in contrary to the conditions in real use of a terminal. So it is up to the person skilled in the art, to use in the processing device a proprietary channel coding algorithm, which will spend more bits of the gross bit rate for data transmission and less bits for channel encoding. Thus the data rate in test mode may be enhanced compared with the net bit data rate of a standard channel.

Although for reason of clarity e.g. the echo-cancelling unit 39 is not shown and the other tests (echo-cancelling test, speech encoder and decoder test) of the first embodiment have not been explained it should be clear that all other test that have been described at the first embodiment could be executed by this embodiment too.

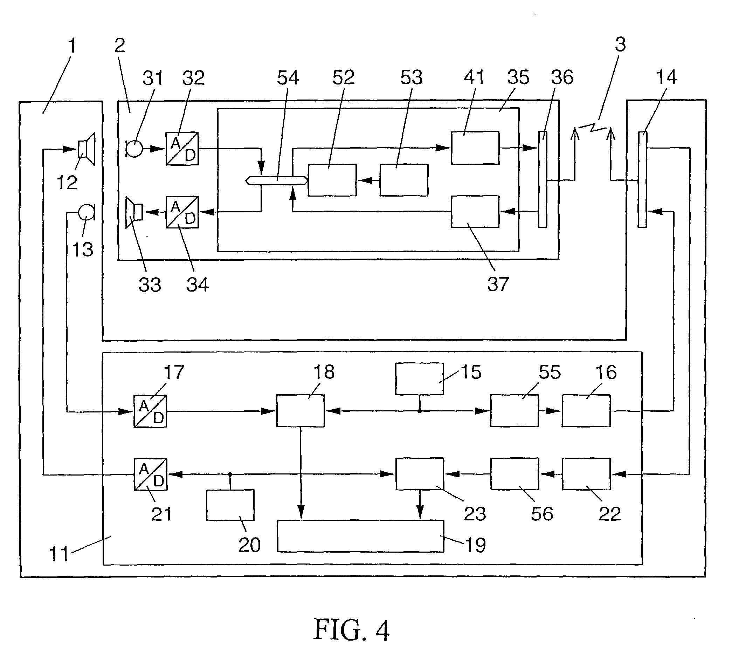

In a third embodiment, shown in figure 4, a standard, data rate reduced speech channel is also sufficient. In the terminal 2 a memory is used to buffer received data or data to be transmitted respectively. Preferably memory areas 52 that are not used by the terminal 2 at the time of the test are used. Of course if not enough free memory is available in test mode the person skilled in the art may decide that it is even more profitable to add additional memory or a bigger memory only for the purposes of this test than to use one of the two methods described so far. Another option is to split the whole acoustic test into smaller sub-tests, which each of them fit into the available memory. For this embodiment the processing device is designed to have an additional memory controller 53. The memory controller 53 is designed to control writing of data received at the output of the channel decoder 37 into the memory 52 and reading data from these data locations with a different clock frequency. The memory controller 53 also controls writing data received from the ADC 32 into the memory 52 and reading this data to encode it in the channel encoder 41. Thus the memory 52 is used as a buffer to adapt the data rate of the radio channel to the data rate of the test signals. For instance over a GSM compliant full rate channel with a net data rate of 13 kbit/s approximately 1600 data words with a data width of eight bits can be transmitted per second. By means of the memory 52 and the memory controller 53 the buffered data can be read as well as written with a data rate of 8 kHz, thus enabling excitation signals and sampling signals up to 4 kHz. In this example transmitting the test data will take five times longer than the test sequence lasts in real time. As the gross data rate is even higher, 22.8 kbit/s for the standard full rate GSM channel, even a higher data rate may be used as in terminal test mode the radio interface is not subject to severe errors and thus a moderate channel coding would be sufficient.

The design of the test device 1 of this embodiment is almost identical to the first embodiment except that also a buffers 54 and are foreseen to buffer the test data before it is handed to the channel encoder 16 or before the received test data is written to the second evaluation means 18. Due to the delay that is caused by the buffering appropriate precautions have to be taken, e.g. by delaying means to compensate this delay before the output signal of the terminal's microphone 31 and the signal of the terminal's loudspeaker 33 sent back via the radio interface 3 signals can be compared with the corresponding tests signals of the test generators 15, 20.

As memory capacity is steadily improving it should not be the main issue in a mobile terminal. Therefore any of the described test program can be stored permanently in the mobile terminal. Whenever there is the need to test a mobile terminal it could be activated by a corresponding test command. Another option is to store the program code for testing only temporarily and to replace this code after the terminal has been tested successfully by the program code that is used for the terminal's normal mode of operation. That also means that the method of bypassing the speech encoder or speech decoder also implies that there is no program code for a speech encoder / speech decoder at the time the tests are carried out.

It is up to the person skilled in the art's judgement, which embodiment is most profitable for a particular design. Different methods of exchanging data for audio testing a mobile terminal have been described. Of course the invention is not restricted to use the same method in both directions. Depending on the design of the mobile terminal it could be advantageous to use different methods for each direction. E.g. if a mobile terminal that offers a high data rate channel only in the down link direction has to be tested it could be a good solution to establish that high speed data channel from the test device to the terminal, transmitting PCM data words as test signal for the terminals loudspeaker.

As in this example in the reverse direction only a low data rate channel is available, the output signal of the terminal's microphone is transmitted to the test device by buffering and transmitting the data words at a lower data rate or by (pre-)processing the data and transmitting only the results.

Furthermore it has be mentioned again that the invention is not restricted to the specific embodiments and examples described in the present invention. That is, on the basis of the teaching contained in the description, various modifications and variations of the invention may be carried out. Although reference was made to the GSM system it should be clear that the invention is applicable to any other communication system where the speech channel capacity is lower than the bandwidth of the test signals that should be used to test the acoustic front-end.

## Claims

1. Method for testing acoustic properties of a terminal for mobile communication by setting the terminal into a test mode, whereby the terminal comprises a microphone to pick up a spoken words, a speech encoder to encode the spoken words into rate reduced data, a radio interface to transmit the rate reduced data and to receive rate reduced data, a speech decoder to decode the received rate reduced data into a speech signal and a loudspeaker to reproduce the speech signal
characterised in
that in the test mode data words representing test data are sent via the radio interface to the terminal which are bypassed to the speech decoder of the terminal and/or that data words representing test result data are bypassed to the speech encoder of the terminal and are transmitted by the terminal via the radio interface.

2. Method according to claim 1,
characterised in
that the test data words are applied to an input of a device to be tested and/or that result data is tapped at the output of a device to be tested.

3. Method according to claim 1 or 2,
characterised in
that the test data words are used as an excitation signal for the loudspeaker of the terminal.

4. Method according to claim 1, 2 or 3
characterised in
that the terminal's microphone is exposed to an acoustic test signal, the output signal of the terminal's microphone is converted into the said result data words.

5. Method according to claim 1, 2, 3 or 4,
characterised in
storing the data words inside the terminal at a first data rate and reading out the stored data words with a second data rate that is different to the said first data rate.

6. Method according to claim 1, 2, 3 or 4
characterised in
using the test data words as commands to control the generation of test signals by means of the processing device.

7. Method according to claim 1, 2, 3, 4 or 6
characterised in
the result data is analysed and the results of this analysis is transmitted to the test device.

8. Method according to claim 1, 2, 3, 4, 5, 6 or 7
characterised in,
that the said test data words are used as an input signal for the speech encoder or the speech decoder of the terminal and that the output signal of the terminal's speech encoder or speech decoder respectively is transmitted back to the test device where it is compared to reference data .

9. Test device for carrying out the method of one of claims 1 - 8
characterised in
that the apparatus has a radio interface which is foreseen to transmit test data to a terminal or to receive test data from a terminal.

10. Terminal for mobile communication
characterised in,
that the terminal is foreseen to provide a speech coder and a speech decoder, that the terminal receives and/or sends test data via its radio interface and that the said test data is bypassed to the terminal's speech encoder and/or speech decoder.
